(19) Europäisches Patentamt
European Patent Office
Office européen des brevets

(11) Publication number: **0 400 935 B1**

# (12) EUROPEAN PATENT SPECIFICATION

(45) Date of publication of patent specification: **12.07.95**

(51) Int. Cl.6: **C08K 13/04**, C08L 67/02, //(C08K13/04,3:22,5:00,7:14)

(21) Application number: **90305769.3**

(22) Date of filing: **25.05.90**

## (54) Flame-retardant and glass fiber-reinforced polyester resin molding compositions.

(30) Priority: **29.05.89 JP 135093/89**

(43) Date of publication of application:
**05.12.90 Bulletin 90/49**

(45) Publication of the grant of the patent:
**12.07.95 Bulletin 95/28**

(84) Designated Contracting States:
**AT BE CH DE DK ES FR GB GR IT LI LU NL SE**

(56) References cited:
**EP-A- 0 174 826**
**EP-A- 0 246 620**

(73) Proprietor: **POLYPLASTICS CO. LTD.**
**3-13, Azuchicho, 2-chome**
**Chuo-Ku**
**Osaka-shi**
**Osaka 541 (JP)**

(72) Inventor: **Ohachi, Yoshinori**
**936 Yodohiracho**
**Fujinomiya-shi,**
**Shizuoka (JP)**
Inventor: **Kato, Atsushi**
**885-11 Miyajima**
**Fuji-shi,**
**Shizuoka (JP)**

(74) Representative: **Jackson, Peter et al**
**HYDE, HEIDE & O'DONNELL**
**10-12 Priests Bridge**
**London SW15 5JE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a flame-retardant polyester resin composition. More particularly, the present invention provides a flame-retardant polyester resin composition from which molded articles having reduced deformation (warpage), and hence dimensional accuracy, may be produced without adversely affecting the inherent excellent mechanical properties and flame-retardance associated with the polyester resin.

Crystalline thermoplastic polyester resin, represented by polyalkylene terephthalate resin, has been used as an engineering plastic in various fields, such as automotive parts and electrical and electronic components, by virtue of its excellent mechanical and electrical properties as well as its excellent physical and chemical characteristics and good processability.

Although crystalline thermoplastic polyester resin has been used alone for the preparation of various molded articles, it has been the conventional practice to add various reinforcements and/or additives to the resin with the purpose of improving its properties, and particularly its mechanical properties, for some end-use applications. It is well known, for example, that fibrous reinforcements such as glass fibers and carbon fibers are usually added to the resin when high mechanical strength and stiffness are required.

Furthermore, when the resin is used in the production of an electrical component, it is conventional to impart flame-retardance properties to the resin. In this regard, a flame-retardant and an auxiliary flame-retardant are typically added to the resin. However, even though crystalline thermoplastic polyester resins containing fibrous reinforcements exhibit desirably mechanical strength properties, they are problematic in that articles molded of such resin (e.g. by injection molding or like processes) experience deformation (i.e. warpage) due to the resin's anisotropy when it shrinks after molding.

The degree of deformation is especially significant with respect to highly crystalline resins, such as polybutylene terephthalate, owing to the mold shrinkage that is known to accompany the resin's crystallization. Crystalline thermoplastic polyester resins containing a flame-retardant and an auxiliary flame-retardant moreover have lower mechanical characteristics, such as strength and/or impact resistance, due to the presence of the flame retardants.

The balance between deformation and mechanical properties, such as strength and stiffness, as well as mechanical and thermal properties is an important factor when considering the suitability of any resin composition for some end-use applications. As noted briefly above, however, a high-stiffness resin composition containing a fibrous material generally undergoes significant deformation when molded. Thus, it is difficult for a polyester resin to satisfy both the requirements of low (if any) deformation and high mechanical strengths and thermal properties.

Particularly, crystalline thermoplastic polyester resins usually must include a meaningful amount of fibrous reinforcement so as to compensate for the lower mechanical strength attributable to the presence of the flame-retardant and auxiliary flame-retardant. As described above, however, the addition of fibrous reinforcement is problematic since it causes significant deformation, i.e., warpage, to occur. As a result, it is difficult to obtain a flame-retardant crystalline polyester resin that is satisfactory in terms of both its deformation and mechanical strength properties. This difficulty can be a barrier to the use of crystalline polyester resins in new fields of application. Improvements have thus been needed in this area.

Our copending European patent application No.89313397.5 filed on 20 December 1989 relates to a thermoplastic resin composition including a fibrous reinforcement of non-circular cross-section to overcome the above-mentioned problems.

The present invention also is directed to solving the said problems. Thus the present invention relates to a crystalline polyester resin composition containing a flame-retardant, an auxiliary flame-retardant and a fibrous reinforcement. The compositions of this invention exhibit reduced deformation without affecting detrimentally the inherent excellent mechanical properties of crystalline polyester resins. In this regard, it has been found that the deformation (i.e., warpage) of crystalline polyester resin can be reduced without lowering the resins' mechanical properties (e.g., flexural strength and stiffness) and processability by using glass fibers having a non-circular cross-sectional shape.

More specifically, the present invention is directed to a flame-retardant polyester resin composition comprising:

(A) a crystalline thermoplastic polyester base resin (preferably in an amount between 30 to 98.4% by weight);
(B) between 1 and 60% by weight of, as a reinforcing medium, glass fibers having a non-circular cross-sectional shape;
(C) between 0.5 and 25% by weight of an organic halogen flame-retardant; and
(D) between 0.1 and 20% by weight of an inorganic auxiliary flame-retardant.

The term "non-circular" referring to the cross-sectional shape of the fibers, perpendicular to their longitudinal axis, is defined by the ratio between the major axis of the cross section (i.e. its longest linear dimension) and the minor axis of the cross section (i.e. its longest linear dimension perpendicular to the major axis). For the purposes of the present invention the said ratio is between 1.5 and 5.

The compositions of the present invention may optionally include (E) between 0.01 to 5% by weight of a polytetrafluoroethylene (PTFE) resin to improve further the compositions' flame-retardance properties.

Unless indicated to the contrary, all weight percents are expressed in terms of the total weight of the composition.

The crystalline thermoplastic base resin component (A) that may be used in the present invention is a crystalline polyester prepared by the polycondensation of either a dicarboxylic acid with a low-molecular weight dihydroxyl compound, a hydroxy carboxylic acid, or all three such compounds. The polyester may be either a homopolymer or a copolymer.

Examples of the dicarboxylic acid that may be used in the preparation of the polyester resin include known dicarboxylic acids such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids and alkyl-or alkoxy-substituted derivatives thereof. These dicarboxylic acids may each be used in the form of their respective ester-forming derivatives, for example, an ester thereof with a lower alcohol, such as a dimethyl ester. Furthermore, these dicarboxylic acids and derivatives may be used as a mixture of two or more of the same. Particularly, preferred are aromatic dicarboxylic acids represented by terephthalic acid and isophthalic acid.

Examples of dihydroxyl compounds that may be used to form the crystalline thermoplastic polyester base resin include dihydroxyl compounds such as ethylene glycol, propylene glycol, butanediol, neopentyl glycol, hydroquinone, resorcinol, dihydroxyphenyl, naphthalenediol, dihydroxydiphenyl ether, cyclohexanediol, 2,2-bis(4-hydroxyphenyl) propane and diethoxylated bisphenol A; and polyoxyalkylene glycols and alkyl- and alkoxy-substituted derivatives thereof. These compounds may be used alone or as a mixture of two or more of the same.

A small amount of a trifunctional monomer may also be used in addition to the above components to prepare a polyester having a branched or crosslinked structure. Preferred trifunction monomers include trimellitic, trimesic and pyromellitic acids, pentaerythritol and trimethylolpropane.

Any crystalline thermoplastic polyester prepared by the polycondensation of the monomer components as described above may be used as the polyester base resin. Although the crystalline thermoplastic polyester resins thus prepared may be used alone or as a mixture of two or more of the same, it is preferable to use a polyalkylene terephthalate, and more preferably polybutylene terephthalate, or a compolymer or mixture containing at least 60% by weight of polybutylene terephthalate. Thus, for example, the polyester base resin (component (A)) may be a blend comprised of a major amount (e.g. at least 60% by weight) of polybutylene terephthalate and at least one other polymer, such as polyethylene terephthalate or a modified polyethylene terephthalate.

According to the present invention, glass fibers having a non-circular section are added to the crystalline thermoplastic polyester base resin as the reinforcement component (B). The glass fibers that may be used in the compositions of the present invention are especially characterized by having a non-circular cross-section and thus are unlike the circular cross-section fibers that are typically employed.

As noted briefly above, polyester resin compositions containing a fibrous reinforcement generally undergo significant deformation. This deformation is due in large part to the fibrous reinforcement being oriented in the molding flow direction. This fiber orientation thus enhances the mold shrinkage anisotropy (i.e. the percent of dimensional difference between the molded article and the mold) of the composition. Suprisingly, it has now been found that a polyester resin composition containing a fibrous reinforcement having a non-circular cross-section exhibits reduced mold shrinkage anisotropy without deleteriously affecting the mechanical properties inherent in polyester resin. As a result, the compositions of the present invention exhibit remarkably reduced deformation and warpage.

The fibrous reinforcement medium employed in the compositions of the present invention is one in which the fibers thereof have a ratio of major cross-sectional axis to minor cross-sectional axis of between 1.5 and 5. Examples of the cross-sectional shapes and/or contours that the fibers or the fibrous reinforcing medium employed in the compositions of this invention may have include fibers having a generally oblate, elliptical, oval, semi-circular, arcuate and rectangular cross-sectional area. Among these examples, fibers having oblate, oval and elliptical cross sectional forms are particularly preferred.

When the ratio of the major axis to the minor axis of the fiber reinforcement medium is less than 1.5, little effect on reducing deformation is obtained. On the other hand, it is usually quite difficult to make a fiber reinforcement medium with a major axis to minor axis ratio in excess of 5. It is also possible to use

hollow non-circular fibers as the reinforcement medium so as to reduce the reinforcement medium's specific gravity.

Increasing the cross-sectional area of the fibrous reinforcement medium decreases the reinforcing effect realized by the reinforcing medium. On the other hand, a fibrous reinforcement medium having an excessively small cross-sectional area is not only difficult to prepare, but is also difficult to handle and/or process. Therefore, the cross-sectional area of the fibrous reinforcement medium used in the present invention is preferably between $2 \times 10^{-5}$ and $8 \times 10^{-3} mm^2$, more preferably $8 \times 10^{-5}$ and $8 \times 10^{-3} mm^2 m$, and most preferably between $8 \times 10^{-5}$ and $8 \times 10^{-4} mm^2$.

The fibers of the fibrous reinforcement medium have any length. When consideration is given to the balance between the desired mechanical properties and deformation of the molded article, a small fiber length is preferred in order to reduce the degree of deformation of the molded article, while a large length (i.e., an average fiber length of at least 30μm) is preferred from the viewpoint of mechanical strength. The fiber length is therefore properly selected in dependence upon the performance required of the molded article. In general, however, the length of the fibers employed in the fibrous reinforcement medium is usually between 50 and 1000μm.

It is preferable from the standpoints of handling of the glass fiber and its adhesion to the polyester base resin that the glass fibers include a sizing agent or be surface treated. The sizing agent or surface treatment may be of any variety, with examples thereof including epoxy, isocyanate, silane and titanate compounds. According to the present invention, the glass fibers may be used in a preliminarily treated state or be preliminarily surface-treated. Alternatively, both the components may be added simultaneously during the course of the preparation of the composition.

The glass fibers as described above that may be used in the present invention can be prepared by spinning a molten glass through shaped apertures (e.g. apertures in the shape of ovals, ellipses, rectangles or slits) associated with a fiber-forming bushing. Alternatively, the glass fibers may be prepared by spinning molten glass through a plurality of nozzles having various cross-sectional shapes (including circular) which are provided close to each other. The spun molten glass fibers of different cross-sectional shape may then be combined to form a multi-filament roving.

The amount of the glass fibers to be used in the compositions of the present invention is between 1 to 60% by weight, and preferably 5 to 50% by weight. When the amount of glass fibers is less than 1% by weight, little beneficial effect can be obtained. On the other hand, when the amount of the glass fibers exceeds 60% by weight, the resin will be difficult to mold. The amount of the functional surface treatment or sizing agent that may simultaneously be used is between 0 to 10% by weight, preferably 0.05 to 5% by weight based on the weight of the glass fibers.

The organic halogen flame-retardant to be used in the present invention as the component (C) may be any organic halogen compound which is generally used as a flame-retardant for thermoplastic polyester resins. Examples include halogenated phenyl, halogenated diphenyl ether, halogenated aromatic bisimide compounds, halogenated aromatic epoxy compounds, low-molecular weight organic halogen derivatives of bisphenol A, halogenated polycarbonate and halogenated polystyrene. In these compounds, it is generally preferable that the halogen be bromine. These flame-retardants may be used alone or as a mixture of two or more of the same.

Although the use of any flame-retardant selected from among those described above can usually impart flame-retardant properties to the resin composition, it is preferable to use a halogenated aromatic bisimide, halogenated aromatic epoxy compound, halogenated diphenyl compound or halogenated polycarbonate. Furthermore, although halogenated aromatic bisimides or halogenated aromatic epoxy compounds are particularly preferable in respect of the heat stability during processing and their molding properties (such as high-cycle moldability and noncorrosiveness to the mold), the use of such compounds increases the crystallization effect as compared to the use of other flame-retardants. This increased crystallization effect thus results in a significantly deformed molded article. It is therefore even more critically important to use the non-circular glass fibers as described above when halogenated aromatic bisimides or epoxy compounds are employed as flame-retardants so as to inhibit the deformation caused by the crystallization acceleration effect of the latter.

The preferred halogenated aromatic bisimide compound is represented by the general formula (1):

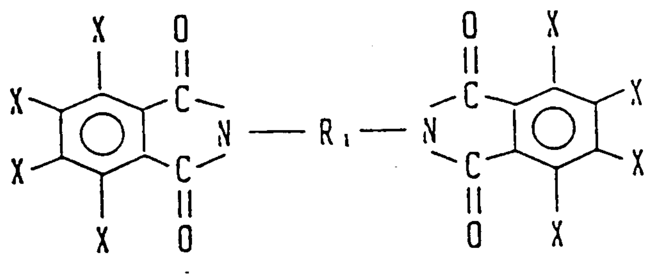

···(1)

wherein $R_1$ is a divalent organic group, generally an alkylene or arylene group, preferably a lower alkylene group, and wherein at least one of the X groups is a halogen atom. Advantageously, the halogen atoms are bromine and are present in an amount of at least 25% by weight of the molecule.

Preferred examples of the halogenated aromatic bisimide compound include lower alkylenebistetrabromophthalimide compounds represented by N,N'-ethylenebistetrabromophthalimide.

The preferred halogenated aromatic epoxy compound which is an epoxy compound of bisphenol A type is represented by the general formula (2);

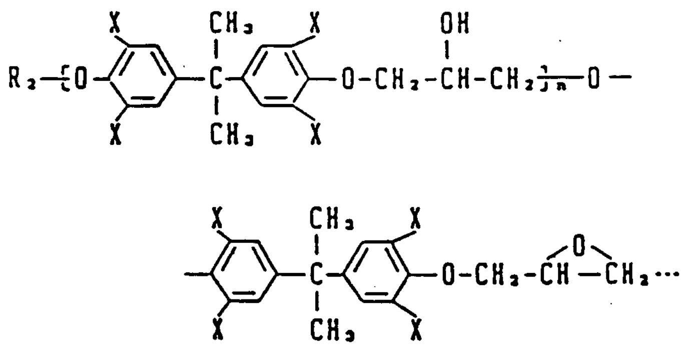

···(2)

wherein at least one of the X groups is a halogen atom; $R_2$ is a hydrogen atom or a glycidyl group and n is an integer (representing the average degree of polymerization) of 2 or more, preferably 2 to 20, and most preferably 10 to 20.

Such a halogenated aromatic epoxy compound can be prepared by, for example, condensing epichlorohydrin with halogenated bisphenol A either alone or together with bisphenol A to obtain halogenated bisphenol A diglycidyl ether and reacting the formed ether with halogenated bisphenol A alone or a mixture thereof with bisphenol A in the presence of a catalyst under heating to 80 to 250 °C.

The amount of the flame-retardant component (C) to be used is between 0.5 and 25% by weight based on the total weight of the composition. When the amount is too large, the mechanical and physical properties and heat stability of the resulting composition will be poor. In addition, the appearance thereof will be deleteriously affected. On the other hand, when the amount is too small, insufficient flame-retardance properties of the resulting composition will ensue.

Representative examples of the inorganic auxiliary flame-retardant component (D) include oxides and hydroxides of metals, such as antimony trioxide, antimony tetraoxide, antimony pentoxide, sodium pyroantimonate, stannic oxide, aluminium hydroxide and magnesium hydroxide. The amount of the auxiliary flame-retardant (D) is between 0.1 and 20% by weight, preferably 1 and 10% by weight, based on the total weight of the composition.

As indicated above, the inclusion of polytetrafluoroethylene (PTFE) resin in the composition of the present invention is optional. However, the use of PTFE resins is preferable to obtaining excellent flame-retardance, and particularly drip-resistance during burning according to Section V$\sigma$ of UL Standard 94. The polytetrafluoroethylene resin can be prepared by known methods such as emulsion polymerization or suspension polymerization and is commercially available from a number of sources.

The polytetrafluoroethylene resin may be selected from among those resins having various degrees of polymerization (viscosity) with regard to the dispersibility of the PTFE resin, as well as the moldability and other physical properties of the resulting composition. The PTFE resin may be in powder, granule and/or fiber form. If in particulate form, the particle size thereof can be controlled thoughout a wide range between about 0.05μm and several millimeters. Although the form and particle size of the PTFE resin may be determined experimentally depending upon the processability of the composition and the objective performance and effect thereof, it is preferable from the standpoint of the handleability of the composition, workability and productivity that the polytetrafluoroethylene resin be one having a mean particle size of between 20 and 800μm. More preferred, however, is granular PTFE having a mean particle of size of between 100 and 700μm.

Although the glass fiber-reinforced flame-retardant polyester resin composition according to the present invention exhibits reduced deformation and improved mechanical properties as compared with conventional flame-retardant polyester resin composition glass (i.e. those compositions having glass fibers of circular cross-section), the additional use of a powdery, granular or flaky inorganic filler gives a further deformation depressing effect.

Examples of the powdery or granular filler include silicates such as silica, quartz powder, glass beads, glass powder, calcium silicate, aluminium silicate, kaolin, talc, clay, diatomaceous earth and wollastonite; metal oxides such as iron oxides, titanium oxide, zinc oxide and alumina; metal carbonates such as calcium carbonate and magnesium carbonate; metal sulfates such as calcium sulphate and barium sulphate; silicon carbide, silicon nitride, boron nitride and various powdered metals. Examples of the flaky filler include mica, glass flake and various metal foils.

It is preferably to use one or more fillers suitably selected from the group consisting of glass beads, glass powder, glass flake, clay, calcium carbonate, magnesium carbonate and mica, depending upon the heat resistance, dimensional stability and electrical properties required. If necessary, the above fillers may be used together with a sizing agent or surface treatment as described above.

The resin composition according to the present invention may further contain a small amount of another thermoplastic resin as an auxiliary component, provided that the beneficial attributes of the compositions according to the present invention are not hindered thereby. The thermoplastic resin to be used as an auxiliary component may be any one which is stable at high temperature, even when used together with a flame-retardant.

Examples of the thermoplastic resin include polyester resin other than the polyester resin employed as component (A), polycarbonate, polyamide, ABS, polyphenylene oxide, polyalkyl acrylate, polysulfone, polyimide, polyether, polyacrylate and polymethacrylate, which may be also used as a mixture of two or more of the same.

The resin compositions of the present invention may further contain known additives for thermoplastic or thermosetting resins for the purpose of imparting desired characteristics to the compositions. Examples of such additives include stabilizers such as antioxidants, heat stabilizers and ultraviolet absorbers; antistatic agents; lubricants; mold release agents; coloring agents such as dyes and pigments; lubricating agents; plasticizers; crystallization accelerators; and nucleating agents.

Conventional reinforcement fibers, other than glass fibers, may also be added to the compositions. Examples of such fibers, include fibers formed of carbon, ceramic, boron, potassium titanate, and asbestos.

As described above, the flame-retardant polyester resin compositions containing glass fibers having a specific cross-section, a flame-retardant and an auxiliary flame-retardant according to the present invention provide molded articles exhibiting remarkably reduced deformation (i.e. warpage). Furthermore, in terms of the mechanical properties such as strength, stiffness and impact resistance, the compositions are not inferior, but rather are improved as compared with reinforced polyester resins according to the prior art. As a result, the compositions of the present invention strike a good balance between strength and deformation.

Thus, the compositions of the present invention exhibit excellent mechanical properties, flame-retardance, dimensional accuracy and processability, so that they may favorably be used in the production of precision structural or mechanical parts of electrical appliances, automobiles or other general apparatus where flame-retardance is required.

## EXAMPLES

The present invention will now be described further by the following non-limiting examples.

(1) Deformation

A flat piece (80mm x 80mm x 2mm) having one gate on its side was molded and placed on a flat surface plate to measure the deformation of the most significantly deformed part (the part wherein the gap between the precisely flat part and the test piece is largest) of the test piece.

(2) Determination of physical properties

| | |
|---|---|
| Tensile strength: | determined according to ASTM D638 |
| Flexural properties | flexural strength and flexural modulus were determined according to ASTM D790 |
| Izod impact strength | determined according to ASTM D256 |

(3) Burning test (UL-94)

Five sample pieces of thickness 0.8 mm (1/32 inch) were examined for flame-retardance and dropping characteristics of the resin upon burning according to the method of Underwriter's Laboratories, subject 94 (UL 94).

### Examples 1 to 7

Polybutylene terephthalate as the component (A), sized chopped glass fiber having a length of 3mm and a cocoon-like section having a ratio of the length of the major axis to that of the minor axis of about 2.3 as the component (B) and a flame-retardant (C) and auxiliary flame-retardant (D) given in Table 1 and, if necessary, a polytetrafluoroethylene resin (E) were mixed with each other and pelletized with an extruder. The obtained pellets were injection molded into various test pieces. The test pieces were examined for the above characteristics. The results are shown in Table 1.

### Examples 8 and 9

The same polybutylene terephthalate resin as that used in Example 1 as the component (A) was mixed with chopped glass fiber having a length of 3mm and elliptic section having a ratio of the length of the major axis to that of the minor axis of about 1.8 as the component (B), a flame-retardant (C) and an auxiliary flame-retardant (D) given in Table 1 and a polytetrafluoroethylene resin (E) to obtain a mixture. This mixture was pelletized and examined in a similar manner to that described in Example 1. The results are shown in Table 1.

### Comparative Examples 1 to 9

Polybutylene terephthalate (A) was mixed with chopped glass fiber having a length of 3mm and a circular section which is not according to the present invention alone or together with components given in Table 2 to obtain various mixtures. Thes mixtures were each pelletized and examined in a similar manner to that described in the foregoing Examples. The results are show in Table 2.

### Examples 10 and Comparative Examples 10

Glass flake was added in an amount given in Table 1 to a mixture comprising the same polybutylene terephthalate, glass fiber having a cocoon-like section, flame retardant, auxiliary flame-retardant and polytetrafluoroethylene resins as those used in Example 4. The obtained mixture was pelletized and examined in a similar manner to that described in Example 4. For comparison, the same mixture as that prepared above was prepared except that a glass fiber having a circular section was used instead of the glass fiber having a cocoon-like section and examined in a similar manner to that described above. The results are shown in Tables 1 and 2, respectively.

Example 11 and Comparative Example 11

The same composition as that prepared in Example 4 was prepared except that the polybutylene terephthalate was replaced by a mixture of polybutylene terephthalate with polyethylene terephthalate, pelletized and examined in a similar manner to that of Example 4. For comparison, the same composition as that prepared above was prepared except that a glass fiber having a circular section was used instead of the fiber having a cocoon-like section and examined. The results are shown in Tables 1 and 2.

Examples 12-14 and Comparative Examples 12-14

Example 11 and Comparative Example 11 were each repeated, respectively, except that the components listed in Tables 1 and 2 were employed. The results of Examples 12-14 and Comparative Examples 12-14 are respectively shown in Tables 1 and 2.

The conversion from the metric units $kg/cm^2$ in the Tables to the SI units kPa is 1 $kg/cm^2$ = 98.1 kPa.

The conversion from kg.cm/cm to SI units is 1 kg.cm/cm = 1 kg.mm/mm.

Table 1

| | | | Unit | Example No. | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 |
| Composition | (A) polybutylene terephthalate | | % by weight | 71 | 70.5 | 59.5 | 69.5 | 57.5 | 67.5 | 67.5 | 69.5 | 67.5 | 54.5 | 54.5 | 54.5 | 54.5 | 54.5 |
| | (A) polyethylene terephthalate | | " | | | | | | | | | | | 15 | 15*4 | 15*5 | 15*6 |
| | (B) glass fiber having a flat section*1 | | " | 15 | 15 | 30 | 15 | 30 | 15 | 15 | 15 | 15 | 15 | 15 | 15 | 15 | 15 |
| | (B)' glass fiber having a circular section | | " | | | | | | | | | | | | | | |
| | (C) decabromodiphenyl ether | | " | 7 | 7 | 5 | | | | | | | | | | | |
| | (C) halogenated bisimide*2 | | " | | | | 8 | 7 | | | 8 | | 8 | 8 | 8 | 8 | 8 |
| | (C) brominated epoxy compound*3 | | " | | | | | | 10 | | | 10 | | | | | |
| | (C) brominated polycarbonate | | " | | | | | | | 10 | | | | | | | |
| | (D) antimony trioxide | | " | 7 | 7 | 5 | 7 | 5 | 7 | 7 | 7 | 7 | 7 | 7 | 7 | 7 | 7 |
| | (E) polytetrafluoroethylene | | " | | 0.5 | 0.5 | 0.5 | 0.5 | 0.5 | 0.5 | 0.5 | 0.5 | 0.5 | 0.5 | 0.5 | 0.5 | 0.5 |
| | glass flake | | " | | | | | | | | | | 15 | | | | |
| Quality (properties) | deformation | | mm | 0.6 | 0.6 | 2.2 | 0.5 | 2.1 | 0.5 | 0.6 | 0.7 | 0.0 | 0.1 | 0.3 | 0.1 | 0.1 | 0.2 |
| | tensile strength | | $kg/cm^2$ | 1050 | 1040 | 1410 | 1060 | 1430 | 1070 | 1050 | 1100 | 1110 | 1010 | 1100 | 1100 | 1150 | 1090 |
| | flexural strength | | $kg/cm^2$ | 1560 | 1540 | 2100 | 1500 | 2130 | 1610 | 1570 | 1650 | 1600 | 1600 | 1620 | 1650 | 1680 | 1600 |
| | flexural modulus | | $kg/cm^2$ | 50000 | 57000 | 96000 | 60000 | 97000 | 62000 | 60000 | 61000 | 63000 | 06300 | 61000 | 62200 | 64200 | 60000 |
| | Izod impact resistance (notched) | | kg·cm/cm | 5.6 | 5.7 | 9.3 | 5.0 | 9.6 | 5.6 | 5.7 | 5.4 | 5.2 | 6.2 | 6.1 | 5.6 | 5.8 | 5.9 |
| | burning test | (UL-94) | - | V-2 | V-0 | V-0 | V-0 | V-0 | V-0 | V-0 | V-0 | V-0 | V-0 | V-0 | V-0 | V-0 | V-0 |
| | | number of drops | drop | 5 | 0 | 0 | 0 | 0 | 0 | 0 | 0 | 0 | 0 | 0 | 0 | 0 | 0 |

*1 ratio of major axis to minor axis: 2.3 with respect to Examples 1 to 7, 10 and 11, and 1.0 with respect to Examples 8 and 9

*2 ethylenebistetrabromophthalimide

*3 epoxy resin of halogenated bisphenol A comprising compounds (average molecular weight: 11000) prepared by the reaction of tetrabromobisphenol A with epichlorohydrin

*4 a modified polyethylene terephthalate obtained from terephalic acid, ethylene glycol and neopentyl glycol

*5 modified polyethylene terephthalate obtained from terephthalic acid, isophthalic acid and ethylene glycol

*6 modified polyethylene terephthalate obtained from terephthalic acid, ethylene glycol and 1,4-cyclohexanediol

Table 2

| | | | Unit | Comparative Example No. | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 |
| Composition | (A) polybutylene terephthalate | | % by weight | 85 | 71 | 70.5 | 70 | 59.5 | 69.5 | 57.5 | 67.5 | 67.5 | 54.5 | 54.5 | 54.5 | 54.5 | 54.5 |
| | (A) polyethylene terephthalate | | " | | | | | | | | | | | 15 | 15*4 | 15*5 | 15*6 |
| | (B) glass fiber having a flat section*1 | | " | | | | | | | | | | | | | | |
| | (B)' glass fiber having a circular section | | " | 15 | 15 | 15 | 30 | 30 | 15 | 30 | 15 | 15 | 15 | 15 | 15 | 15 | 15 |
| | (C) decabromodiphenyl ether | | " | | 7 | 7 | | 5 | | | | | | | | | |
| | (C) halogenated bisimide*2 | | " | | | | | | 8 | 7 | | | 8 | 8 | 8 | 8 | 8 |
| | (C) brominated epoxy compound*3 | | " | | | | | | | | 10 | | | | | | |
| | (C) brominated polycarbonate | | " | | | | | | | | | 10 | | | | | |
| | (D) antimony trioxide | | " | | 7 | 7 | | 5 | 7 | 5 | 7 | 7 | 7 | 7 | 7 | 7 | 7 |
| | (E) polytetrafluoroethylene | | " | | | 0.5 | | 0.5 | 0.5 | 0.5 | 0.5 | 0.5 | 0.5 | 0.5 | 0.5 | 0.5 | 0.5 |
| | glass flake | | " | | | | | | | | | | 15 | | | | |
| Quality (properties) | deformation | | mm | 1.3 | 1.3 | 1.3 | 4.9 | 4.0 | 1.5 | 5.0 | 1.4 | 1.3 | 0.0 | 1.1 | 0.9 | 0.9 | 1.0 |
| | tensile strength | | $kg/cm^2$ | 1000 | 1040 | 1030 | 1420 | 1390 | 1050 | 1400 | 1060 | 1030 | 1000 | 1000 | 1090 | 1130 | 1080 |
| | flexural strength | | $kg/cm^2$ | 1600 | 1540 | 1520 | 2150 | 2000 | 1570 | 2100 | 1590 | 1550 | 1500 | 1600 | 1630 | 1660 | 1580 |
| | flexural modulus | | $kg/cm^2$ | 54000 | 56000 | 55000 | 91000 | 93000 | 57400 | 94000 | 50000 | 50000 | 85000 | 50000 | 59100 | 61000 | 57000 |
| | Izod impact resistance (notched) | | kg·cm/cm | 6.0 | 5.2 | 5.3 | 9.8 | 8.5 | 5.1 | 8.6 | 5.0 | 5.3 | 5.6 | 5.3 | 5.0 | 5.1 | 5.2 |
| | burning test | (UL-94) | - | HB | V-2 | V-0 | HB | V-0 | V-0 | V-0 | V-0 | V-0 | V-0 | V-0 | V-0 | V-0 | V-0 |
| | | number of drops | drop | 5 | 5 | 0 | 5 | 0 | 0 | 0 | 0 | 0 | 0 | 0 | 0 | 0 | 0 |

*1 ratio of major axis to minor axis: 2.3 with respect to Examples 1 to 7, 10 and 11, and 1.8 with respect to Examples 8 and 9

*2 ethylenebistetrabromophthalimide

*3 epoxy resin of halogenated bisphenol A comprising compounds (average molecular weight: 11000) prepared by the reaction of tetrabromobisphenol A with epichlorohydrin

*4 a modified polyethylene terephthalate obtained from terephalic acid, ethylene glycol and neopentyl glycol

*5 modified polyethylene terephthalate obtained from terephthalic acid, isophthalic acid and ethylene glycol

*6 modified polyethylene terephthalate obtained from terephthalic acid, ethylene glycol and 1,4-cyclohexanediol

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A flame-retardant, fibre-reinforced polyester resin composition comprising, based on the total weight of the composition:
   (A) a crystalline thermoplastic polyester base resin;
   (B) between 1 and 60% by weight of glass fibres as a reinforcing medium, said glass fibres having a non-circular cross-sectional form and a dimensional ratio of major cross-sectional axis to minor cross-sectional axis of between 1.5 and 5;
   (C) between 0.5 and 25% by weight of an organic halogen flame-retardant; and
   (D) between 0.1 and 5% by weight of an inorganic auxiliary flame-retardant.

2. A composition as claimed in claim 1, wherein the said polyester base resin (A) is a polyalkylene terephthalate resin.

3. A composition as claimed in claim 2, wherein the said polyalkylene terephthalate resin is polybutylene terephthalate.

4. A composition as claimed in claim 3, wherein the said polyester base resin (A) is a blend containing polybutylene terephthalate and at least one other polymer.

5. A composition as claimed in any preceding claim, wherein the said glass fibres (B) have a cross-sectional form selected from at least one of oblate, elliptical, oval, semi-circular, arcuate and rectangular.

6. A composition as claimed in any preceding claim, wherein the said glass fibres (B) have a cross-sectional area of between $2 \times 10^{-5}$ and $8 \times 10^{-3}$ $mm^2$.

7. A composition as claimed in any preceding claim, wherein the said glass fibres (B) have a length between 50 and 1000$\mu$m.

8. A composition as claimed in any preceding claim, wherein the amount of the said glass fibres (B) is between 5 and 50% by weight, based on the total weight of the composition.

9. A composition as claimed in any preceding claim, wherein the said organic halogen flame-retardant (C) is a compound selected from the group consisting of halogenated aromatic bisimide, halogenated polycarbonate, halogenated aromatic epoxy compounds and halogenated diphenyl compounds.

10. A composition as claimed in any preceding claim, which further comprises:
    (E) between 0.1 and 5% by weight, based on the total weight of the composition, of a polytetrafluorethylene resin.

11. A composition as claimed in claim 10, wherein the polytetrafluorethylene resin (E) has a mean particle size of between 20 and 800$\mu$m.

12. A flame-retardant, fibre-reinforced molded article consisting essentially of a normally solid polyester resin composition as claimed in any preceding claim.

## Patentansprüche

1. Flammenhemmende faserverstärkte Polyesterharz-Zusammensetzung, umfassend, bezogen auf das Gesamtgewicht der Zusammensetzung:
   (A) ein kristallines thermoplastisches Polyester-Grundharz;
   (B) zwischen 1 und 60 Gew.-% Glasfasern als ein verstärkendes Medium, wobei die Glasfasern eine nicht kreisförmige Querschnittsfläche und ein Abmessungsverhältnis von der Haupt-Querschnittsachse zur Neben-Querschnittsachse von 1,5 bis 5 aufweisen;
   (c) zwischen 0,5 und 25 Gew.-% eines organischen Halogen-Flammenverzögerungsmittels und
   (D) zwischen 0,1 und 5 Gew.-% eines anorganischen Zusatz-Flammenverzögerungsmittels.

2. Zusammensetzung nach Anspruch 1, wobei das Polyester-Grundharz (A) ein Polyalkylenterephthalat-Harz ist.

3. Zusammensetzung nach Anspruch 2, wobei das Polyalkylenterephthalat-Harz Polybutylenterephthalat ist.

4. Zusammensetzung nach Anspruch 3, wobei das Polyester-Grundharz (A) eine Mischung ist, die Polybutylenterephthalat und wenigstens ein-anderes Polymer enthält.

5. Zusammensetzung nach einem der vorhergehenden Ansprüche, wobei die Glasfasern (B) eine aus wenigstens einer aus der abgeplatteten, elliptischen, ovalen, halbrunden, gekrümmten und rechteckigen ausgewählte Querschnittsform aufweisen.

6. Zusammensetzung nach einem der vorhergehenden Ansprüche, wobei die Glasfasern (B) eine Querschnittsfläche zwischen 2 x $10^{-5}$ und 8 x $10^{-3}$ $mm^2$ aufweisen.

7. Zusammensetzung nach einem der vorhergehenden Ansprüche, wobei die Glasfasern (B) eine Länge zwischen 50 und 1000 µm aufweisen.

8. Zusammensetzung nach einem der vorhergehenden Ansprüche, wobei die Menge der Glasfasern (B) zwischen 5 und 50 Gew.-% beträgt, bezogen auf das Gesamtgewicht der Zusammensetzung.

9. Zusammensetzung nach einem der vorhergehenden Ansprüche, wobei das organische Halogen-Flammenverzögerungsmittel (C) eine aus der aus halogeniertem aromatischem Bisimid, halogeniertem Polycarbonat, halogenierten aromatischen Epoxy-Verbindungen und halogenierten Diphenyl-Verbindungen bestehenden Gruppe ausgewählte Verbindung ist.

10. Zusammensetzung nach einem der vorhergehenden Ansprüche, weiterhin umfassend:
    (E) zwischen 0,1 und 5 Gew.-%, bezogen auf das Gesamtgewicht der Zusammensetzung, eines Polytetrafluorethylen-Harzes.

11. Zusammensetzung nach Anspruch 10, wobei das Polytetrafluorethylen-Harz (E) eine mittlere Teilchengröße von 20 bis 800 µm aufweist.

12. Flammenhemmender faserverstärkter formgepreßter Gegenstand, der im wesentlichen aus einer normalerweise festen Polyesterharz-Zusammensetzung nach einem der vorhergehenden Ansprüche besteht.

**Revendications**

1. Une composition de résine de polyester, ignifuge, renforcée par des fibres comprenant, par rapport au poids total de la composition :
    (A) une résine cristalline thermoplastique à base de polyester;
    (B) entre 1 et 60 % en poids de fibres de verre comme milieu renforçant, lesdites fibres de verre ayant une forme de section transversale non circulaire et un rapport dimensionnel du grand axe de section transversale au petit axe de section transversale entre 1,5 et 5;
    (C) entre 0,5 et 25 % en poids d'un agent ignifuge organique halogéné; et
    (D) ) entre 0,1 et 5 % en poids d'un agent ignifuge inorganique auxiliaire.

2. Une composition selon la revendication 1, dans laquelle ladite résine à base de polyester (A) est une résine de polytéréphtalate d'alkylène.

3. Une composition selon la revendication 2, dans laquelle ladite résine de polyteréphtalate d'alkylène est du polytéréphtalate de butylène.

4. Une composition selon la revendication 3, dans laquelle ladite résine à base de polyester (A) est un mélange contenant du polytéréphtalate de butylène et au moins un autre polymère.

**5.** Une composition selon l'une quelconque des revendications précédentes, dans laquelle lesdites fibres de verre (B) ont une forme en coupe transversale choisie parmi au moins l'une des formes suivantes : aplatie aux pôles, elliptique, ovale, semi-circulaire, arquée et rectangulaire.

**6.** Une composition selon l'une quelconque des revendications précédentes, dans laquelle lesdites fibres de verre (B) ont une aire de section transversale comprise entre $2 \times 10^{-5}$ et $8 \times 10^{-3}$ $mm^2$.

**7.** Une composition selon l'une quelconque des revendications précédentes, dans laquelle lesdites fibres de verre (B) ont une longueur entre 50 µm et 1000 µm.

**8.** Une composition selon l'une quelconque des revendications précédentes, dans laquelle la quantité desdites fibres de verre (a) est entre 5 et 50 % en poids, par rapport au poids total de la composition.

**9.** Une composition selon l'une quelconque des revendications précédentes, dans laquelle ledit agent ignifuge organique halogéné (C) est un composé choisi dans le groupe composé des bisimides aromatiques halogénés, des polycarbonates halogénés, des composés époxy aromatiques halogénés et des composés diphényliques halogénés.

**10.** Une composition selon l'une quelconque des revendications précédentes, qui comprend en outre :

(E) entre 0,1 et 5 % en poids, par rapport au poids total de la composition, de résine de polytétrafluoréthyléne.

**11.** Une composition selon la revendication 10, dans laquelle ladite résine de polytétrafluoréthylène (E) a une grosseur de particules moyenne entre 20 et 800 µm.

**12.** Un article moulé renforcé par des fibres, ignifuge consistant essentiellement en une composition de résine de polyester normalement solide telle que revendiquée dans l'une quelconque des revendications précédentes.